# EUROPÄISCHE PATENTSCHRIFT

(11) **EP 3 218 126 B1**
(45) Veröffentlichungstag und Bekanntmachung des Hinweises auf die Patenterteilung: **10.04.2019**
(21) Anmeldenummer: 15813234.0
(22) Anmeldetag: 12.11.2015
(51) Int. Cl.: B21D 5/02, B21D 37/04

(54) **BESCHICKUNGSVORRICHTUNG UND BIEGEPRESSE UND ANORDNUNG EINER BIEGEPRESSE UND EINER DARAN GEKOPPELTEN BESCHICKUNGSVORRICHTUNG UND VERFAHREN ZUM BESCHICKEN EINER BIEGEPRESSE**
FEEDING DEVICE AND BENDING PRESS AND ARRANGEMENT OF BENDING PRESS WITH A COUPLED FEEDING DEVICE AND FEEDING PROCESS OF A BENDING PRESS
DISPOSITIF D'ALIMENTATION ET PLIEUSE ET ASSEMBLAGE DE PLIEUSE AVEC UN DISPOSITIF D'ALIMENTATION ACCROCHÉ ET PROCÉDÉ D'ALIMENTATION D'UNE PRESSE PLIEUSE

(30) Priorität: 12.11.2014 AT 508272014
(43) Veröffentlichungstag der Anmeldung: 20.09.2017
(73) Patentinhaber: TRUMPF Maschinen Austria GmbH & Co. KG., 4061 Pasching (AT)
(72) Erfinder: CAVICCHIA, Luigi, I-10028 Trofarello (IT); VERONESE, Roberto, I-10023 Chieri (IT); VIDOTTO, Giovanni, I-10023 Chieri (IT)
(74) Vertreter: Burger, Hannes
(86) Internationale Anmeldenummer: PCT/AT2015/050287
(87) Internationale Veröffentlichungsnummer: WO 2016/074011

(56) Entgegenhaltungen:
- EP-A2- 0 310 145
- US-A1- 2009 139 296
- US-B1- 7 168 286

## Beschreibung

Die Erfindung betrifft eine Beschickungsvorrichtung gemäß dem Oberbegriff des Anspruch 1, eine Biegepresse gemäß dem Oberbegriff des Anspruch 12 sowie ein Verfahren zum Beschicken einer Biegepresse mit Biegewerkzeugen und/oder zum Auswechseln von einem oder mehreren in einer Biegepresse eingesetzten Biegewerkzeugen mit einer Beschickungsvorrichtung. Die Erfindung betrifft auch eine Biegewerkzeug-Transfereinrichtung gemäß dem Oberbegriff des Anspruchs 24.

Die Automatisierung sowie die Reduktion der Taktzeiten ist ein wichtiger Aspekt im Zusammenhang mit Biegevorgängen an verschieden zu formenden Werkstücken. Ein Ansatzpunkt zur Erreichung dieses Zieles besteht darin, das Auswechseln der in einer Biegepresse eingesetzten Biegewerkzeuge mit einem eigens dafür vorgesehenen Wechsler zu automatisieren.

Als nächstliegender Stand der Technik ist die JPH0584414U anzusehen. Diese Druckschrift offenbart einen Werkzeugwechsler, der ein Werkzeugdepot aus mehreren, umlaufend angeordneten Werkzeughalterungen umfasst. In jeder Werkzeughalterung wird ein Werkzeugsatz bestehend aus Oberwerkzeug und Unterwerkzeug gehalten. Um ein Werkzeug aus dem Werkzeugdepot in die Biegepresse zu transferieren, wird die entsprechende Werkzeughalterung in eine bestimmte Position gebracht und fährt eine angetriebene Kette aus. Ein am vorderen Ende der Kette befestigter Shuttle weist eine mechanische Andockeinrichtung bzw. Kupplung auf, um an das Werkzeug anzudocken, und verschiebt es in die Biegepresse. Die Kupplung besteht aus einem Fortsatz, der in eine Öffnung des Werkzeuges fährt. Durch nach außen gedrückte Kugeln wird der Fortsatz in der Werkzeugöffnung verankert.

Für das Ober- und Unterwerkzeug sind in der JPH0584414U jeweils gesonderte Ketten mit entsprechenden Andockeinrichtungen vorgesehen. Die Kettenführung und somit auch die Kette und das Shuttle verlaufen sowohl für das Unter- als auch für das Oberwerkzeug gänzlich außerhalb der Werkzeughalterung. Eine solche Konstruktion ist nicht zuletzt aufgrund des Verlaufs der Kettenführung aufwendig und kostspielig. Bestehende Anlagen können nur schwer oder gar nicht nachgerüstet werden. Die Kettenführung ist anfällig für Verschmutzung und beansprucht gerade in jenem Bereich, der für eine optimale Bedienung und Werkstückpositionierung zugänglich und frei von Hindernissen sein sollte, übermäßig viel Raum. Ein wesentlicher Nachteil dieses Standes der Technik besteht darin, dass insbesondere die Andockeinrichtung bzw. Kupplung des Shuttles exponiert ist und äußeren Einflüssen besonders stark ausgesetzt ist. Dies kann mitunter dazu führen, dass die Kupplung beschädigt oder aufgrund übermäßiger Verschmutzung nicht mehr funktionsfähig ist.

Die DE3326067A1 offenbart eine Formwechselvorrichtung für Formmaschinen, insbesondere Spritzgussmaschinen. Die Formhälftenpaare werden auf sogenannten Rollenwagen bzw. Rollentransfervorrichtungen in bzw. aus der Spritzgussmaschine gefahren. Mittels einer Zug-Druck-Vorrichtung werden die Formhälftenpaare von den Rollenwagen auf die Rollentransfervorrichtungen (und umgekehrt) überführt. Die Zug-Druck-Vorrichtung umfasst einen Antrieb und eine Stahlkette, die mittels des Antriebs in eine Zug-Druck-Bewegung setzbar ist. Am vorderen Ende der Stahlkette ist ein Haken vorgesehen, um an das Formhälftenpaar anzukoppeln. Diese Konstruktion unterscheidet sich stark von einer Biegepresse; eine Implemetierung dieses Systems in eine Biegepresse bedeutet nicht nur hohen Aufwand, sondern erfordert eine grundlegend andere Konzeption der Biegepresse.

Die JPS57181725A offenbart eine automatische Werkzeugwechseleinrichtung für eine Biegepresse. Ein Werkzeugspeicher wird durch eine Trommel größeren Durchmessers und eine Trommel kleineren Durchmessers gebildet. Zum Beschicken der Biegepresse mit einem bestimmten Werkzeug wird zunächst die Trommel in eine entsprechende Drehstellung gebracht und anschließend das ausgewählte Werkzeug mittels eines Schlittens entlang einer eigens dafür vorgesehenen Führung in die Biegepresse befördert. Der raumfordernde Schlitten, der das Werkzeug trägt bzw. hält, bewegt sich zwischen Ober- und Unterwerkzeughalterung. Als Zug-Druck-Mittel dient auch hier eine angetriebene Kette. Die Anordnung der Führung ist auch hier ungünstig gewählt. Beim Vorsehen von verfahrbaren Hinteranschlägen sind die Möglichkeiten aufgrund des Platzmangels stark begrenzt und Kollisionen zu befürchten. Aufgrund der schweren Zugänglichkeit der Führungen sind Einbau, Wartung und Reparatur sehr aufwendig. Ein Nachrüsten bestehender Anlagen mit einem Wechselsystem ist nicht möglich.

Die JPS60244426A offenbart einen Werkzeugwechsler für eine Biegemaschine, enthält jedoch in Bezug auf die detaillierte Konstruktion des Werkzeugwechslers keine konkrete Lehre.

Die US 7168286 B1 offenbart eine Vorrichtung zum Befestigen eines Stempelwerkzeuges an einem Balken einer Biegepresse. Die Vorrichtung weist einerseits ein äußeres Profil mit zwei länglich verlaufenden Ausnehmungen auf, um von einer Werkzeughalterung gehalten werden zu können, und andererseits ein inneres Profil, um darin ein Biegewerkzeug aufnehmen und halten zu können. Es handelt sich bei dieser Vorrichtung somit um eine Art Adapter, mit dem auch ältere und damit anders ausgebildete Werkzeuge an einem neuartig ausgebildeten Balken einer Biegepresse befestigt werden können. Diese Vorrichtung ermöglicht somit die Verwendung älterer Werkzeuge in neueren Biegepressen.

Die US 2009/0139296 A1 offenbart Werkzeughalter zum Halten von Formwerkzeugen für eine Metallpresse. Die Werkzeughalter umfassen jeweils ein Paar von gegenüberliegenden Haltefingern, die in längliche Rillen des Formwerkzeuges greifen. Die Formwerkzeuge können auf diese Art hängend gehalten werden. Die Werkzeughalter dienen dem Speichern der Formwerkzeuge, wenn diese nicht in Gebrauch sind, und können innerhalb eines Regals angeordnet werden.

Die EP 0310145 A2 offenbart eine Biegemaschine zum Biegen von Metallplatten. Die obere Werkzeuganordnung umfasst zentrale Formsegmente und Randsegmente. Die Randsegmente können durch einen Antriebsmechanismus bewegt werden. Der Antriebsmechanismus umfasst eine Gewindestange, wobei jedes Randsegment ein Innengewinde aufweist, in dem die Gewindestange verläuft.

Ein sich aus dem Stand der Technik ergebender Nachteil im Hinblick auf ein Werkzeugpositionier- bzw. Werkzeugwechselsystem betrifft das Ankoppeln eines Biegewerkzeuges an eine Transfereinrichtung, wie z.B. an eine Kette und/oder ein Shuttle. Die exponierte Anordnung der Kupplung der Transfereinrichtung im Stand der Technik führt zur Beschädigung durch Kollisionen mit anderen Bauteilen oder Werkstücken und zu schneller Verschmutzung, durch welche die Kupplung mitunter sogar funktionsfähig wird. Nachteilig ist auch die aufwendige und kostspielige Konstruktion, die für die Zuführung der die Kupplung aufweisenden Transfereinrichtung und der Biegewerkzeuge erforderlich ist. Die z.T. exponierte Anordnung der Ketten- bzw. Shuttle-Führungen erfordert viel Raum und ist anfällig für äußere Einflüsse, wie Verschmutzung, Stöße, Kollisionen mit anderen bewegbaren Bauteilen, wie z.B. Anschlägen, Sensoren, etc. Besonders nachteilig wirkt sich aus, dass bestehende Anlagen nicht mit den Werkzeugwechslern des Standes der Technik kombinierbar sind bzw. dafür aufwendige Umbauarbeiten erforderlich wären.

Das Ziel der Erfindung besteht darin, eine Biegepresse und eine Beschickungsvorrichtung bereitzustellen, mit der die im Stand der Technik auftretenden Probleme gelöst werden können und die sich insbesondere durch platzsparende Bauweise und Nachrüstbarkeit bestehender Biegepressen bzw. -anlagen auszeichnen. Die Transfereinrichtung und die daran angeordnete Kupplung sollen zwischen Biegepresse und Beschickungsvorrichtung möglichst geschützt verlaufen und vor Verschmutzung und anderen äußeren Einflüssen verschont bleiben. Wartung, Reparatur und Austausch soll einfach von statten gehen.

Dieses Ziel wird mit einer Biegepresse und Beschickungsvorrichtung der eingangs genannten Art dadurch gelöst, dass die Transfereinrichtung in der Schiene der Werkzeughalterung geführt ist und der Wirkbereich der Kupplung zumindest teilweise im Inneren der Schiene liegt.

Durch diese Maßnahme wird nicht nur eine zuverlässige Führung der Transfereinrichtung ermöglicht, sondern es erfolgt die Ankopplung an das Biegewerkzeug und somit auch die Kraftübertragung von der Transfereinrichtung auf das Biegewerkzeug im unmittelbaren Bereich der Schiene, in der das Biegewerkzeug geführt ist. Dadurch wird eine reibungsarme Bewegung des Biegewerkzeuges in der Schiene gewährleistet. Kräfte oder Momente, die quer zur Längserstreckung der Schiene wirken, können durch die erfindungsgemäße Maßnahme minimiert werden. Ein Verkannten des Biegewerkzeuges innerhalb der Schiene wird damit hintangehalten.

Die Kupplung weist eine freigebende (gelöste) Stellung und eine ankoppelnde Stellung auf und ist durch einen Aktuator betätigbar. Die Kupplung kann z.B. als mechanische Kupplung, magnetische Kupplung oder als Ansaugvorrichtung ausgebildet sein. Die Kupplung kann eine kraftschlüssige und/oder formschlüssige Verbindung mit dem Biegewerkzeug herstellen.

Der Aktuator zum Betätigen der Kupplung kann eine Zylinder-Kolben-Einheit, einen Linearantrieb, einen Motor, eine Unterdruckeinrichtung und/oder eine elektromagnetische Einrichtung umfassen.

Unter dem Begriff Wirkbereich ist jener Bereich der Kupplung zu verstehen, der in der ankoppelnden Stellung mit dem Biegewerkzeug zusammenwirkt, d.h. mit dem Biegewerkzeug in Kontakt bzw. in Eingriff kommt. Der Wirkbereich kann eine an der Kupplung ausgebildete Wirkfläche oder Kontaktfläche sein, z.B. Greifflächen eines Greifers, die am Biegewerkzeug anliegen.

Ein wesentlicher Vorteil der Erfindung im Hinblick auf den eingangs erwähnten Stand der Technik besteht darin, dass für die Transfereinrichtung keine gesonderte Schiene bzw. Führung vorgesehen werden muss, wodurch der Konstruktionsaufwand erheblich reduziert werden kann. Die in der Biegepresse und/oder in der Beschickungsvorrichtung eingesetzten Biegewerkzeuge werden in derselben Schiene gehalten, in der auch die Transfereinrichtung bzw. ein Abschnitt der Transfereinrichtung eingesetzt bzw. gehalten ist.

Das erfindungsgemäße Prinzip ist sowohl auf Biegepressen als auch auf Beschickungsvorrichtungen anwendbar. Biegepressen könnten aber auch - unabhängig vom Vorhandensein einer Beschickungsvorrichtung - eine angetriebene Transfereinrichtung aufweisen, die zum Verschieben bzw. exakten Positionieren eines Biegewerkzeuges innerhalb der Werkzeughalterung dient. Bei einer kombinierten Anordnung, d.h. bei einer an eine Biegepresse angekoppelten Beschickungsvorrichtung können die Biegewerkzeuge von der Werkzeughalterung der Beschickungsvorrichtung zu der Werkzeughalterung der Biegepresse verschoben werden und umgekehrt.

Die Biegepresse bzw. die Beschickungsvorrichtung umfassen vorzugsweise eine Steuereinrichtung, durch die der Vorgang des Verschiebens, des Beschickens und/oder Wechseln der Werkzeuge automatisiert ist. Zu diesem Zweck ist die Steuereinrichtung mit der Kupplung bzw. mit einem die Kupplung betätigenden Aktuator verbunden. Die Steuereinrichtung kann auch mit dem (Verfahr)Antrieb der Transfereinrichtung (sowie gegebenenfalls anderer Antriebe der Beschickungsvorrichtung z.B. für einen gegebenenfalls vorhandenen bewegbaren bzw. verfahrbaren Biegewerkzeugspeicher) verbunden sein.

Bei der Biegepresse handelt es sich insbesondere um eine Presse zum Biegen metallischer Werkstücke, insbesondere (Stahl-)Bleche.

Eine bevorzugte Ausführungsform zeichnet sich dadurch aus, dass der Wirkbereich der Kupplung vollständig innerhalb der Schiene liegt. Der mit dem Biegewerkzeug zusammenwirkende Abschnitt der Kupplung ist durch seine vollständige Unterbringung in der Schiene optimal geschützt, während gleichzeitig die Krafteinleitung an einer günstigen Stelle erfolgt, die ein Verkannten des Biegewerkzeuges verhindert. In einer weiterführenden Ausführungsform befinden sich alle an der Außenseite der Transfereinrichtung liegenden beweglichen Abschnitte der Kupplung zur Gänze innerhalb der Schiene.

Eine bevorzugte Ausführungsform zeichnet sich dadurch aus, dass sich die Kupplung in einem Bereich des Innenprofils der Schiene erstreckt, der vom Biegewerkzeug nicht vollständig ausgefüllt ist. Dadurch kann zumindest ein Abschnitt der Kupplung seitlich neben das Biegewerkzeug verfahren werden. Dies eröffnet auch die Möglichkeit eines Greifens des Biegewerkzeuges von gegenüberliegenden Seiten.

Eine bevorzugte Ausführungsform zeichnet sich dadurch aus, dass zumindest eine Innenwand der Schiene eine sich in Längsrichtung der Schiene erstreckende Führungsstruktur ausbildet und dass die Kupplung - in zumindest einer Stellung -in der Führungsstruktur liegt oder in diese hineinragt. Dadurch kann die Transfereinrichtung und die Kupplung auf engstem Raum untergebracht werden. Die Führungsstruktur stellt einen definierten Raum für die Kupplung zur Verfügung. Dabei ist es denkbar, dass die Kupplung nur in der freigebenden oder ankoppelnden Stellung in der Führungsstruktur liegt, oder aber auch, dass die Kupplung sowohl in der freigebenden als auch in der ankoppelnden Stellung in die Führungsstruktur ragt.

Eine bevorzugte Ausführungsform zeichnet sich dadurch aus, dass das Biegewerkzeug in der Schiene durch dieselbe Führungsstruktur gehalten wird, durch den die Transfereinrichtung (z.B. Shuttle) geführt ist und/oder in der sich die Kupplung erstreckt. Dies ist besonders vorteilhaft, da für die Transfereinrichtung bzw. die Kupplung keine gesonderte Führungsstruktur vorgesehen werden muss. Das Biegewerkzeug wird beispielsweise durch vom Schaft des Biegewerkzeuges abragende Haltemittel, wie z.B. Stifte, Pins oder Leisten gehalten. Die Haltemittel ragen in die Führungsstruktur, wodurch das Biegewerkzeug in der Schiene gehalten wird. Die Haltemittel können auch beweglich sein und z.B. durch ein Betätigungselement des Biegewerkzeuges (sog. Sicherheitsstifte) von einer haltenden in eine freigebende Stellung bewegt werden. Dies ermöglicht das Einsetzen der Biegewerkzeuge in einer Richtung quer zur Längserstreckung der Schiene.

Die Führungsstruktur in der Schiene kann auch dazu ausgebildet sein, um die Transfereinrichtung in der Schiene zu halten. Die innerhalb der Schiene ausgebildete Führungsstruktur besitzt zusätzlich zur Führungsfunktion entlang der Längserstreckung der Schiene eine Haltefunktion, indem sie die Transfereinrichtung in (oder innerhalb) der Schiene hält. Die Transfereinrichtung ist entlang der Führungsstruktur (d.h. parallel zur Längserstreckung der Schiene) verschiebbar und in der Richtung senkrecht zur Längserstreckung der Schiene (d.h. in der Richtung vom Schieneninneren zur Schienenöffnung hin) durch die Führungsstruktur gehalten. Die Führungsstruktur verhindert somit, dass die Transfereinrichtung aus der Schiene fällt bzw. herausspringt.

Besonders bevorzugt wird, wenn zur Führung der Transfereinrichtung und zur Unterbringung der Kupplung bereits bestehende Führungsstrukturen innerhalb der Schiene verwendet werden können. Damit lässt sich das erfindungsgemäße Prinzip auch auf bestehende Anlagen ohne bzw. mit nur geringfügigen Adaptierungen anwenden.

Eine bevorzugte Ausführungsform zeichnet sich dadurch aus, dass die Kupplung durch einen mechanischen Greifer gebildet wird. Dadurch kann ein Biegewerkzeug zuverlässig an die Transfereinrichtung angekoppelt werden. Auch das Lösen der Kupplung geht einfach vor sich; vor allem wird die Gefahr, dass das Biegewerkzeug an der Transfereinrichtung ,hängen' bleibt stark reduziert.

Eine bevorzugte Ausführungsform zeichnet sich dadurch aus, dass der Greifer zwei Greifarme umfasst, die vorzugsweise vollständig innerhalb der Schiene liegen. Die Greifarme bzw. ihre Mechanik sind dadurch zur Gänze geschützt. Die Lebensdauer der Kupplung kann dadurch deutlich erhöht werden.

Bevorzugt erstrecken sich die Greifarme ihrer Länge nach im Wesentlichen parallel zur Längserstreckung der Schiene der Werkzeughalterung; und/oder steht die Schwenkachse der Greifarme im Wesentlichen senkrecht zur Längserstreckung der Schiene und im Wesentlichen parallel zur Richtung, in die sich die Schiene öffnet.

Eine bevorzugte Ausführungsform zeichnet sich dadurch aus, dass zwei gegenüberliegende Innenwände der Schiene jeweils zumindest eine sich entlang der Längserstreckung der Schiene verlaufende Führungsstruktur, vorzugsweise in Form einer Nut, ausbilden und dass sich - in zumindest einer Stellung der Kupplung - ein Greifarm in der einen Führungsstruktur und der andere Greifarm in der gegenüberliegenden Führungsstruktur erstreckt. Auf diese Weise kann ein Greifersystem auf engstem Raum realisiert werden. Das Biegewerkzeug wird von den Greifarmen beiderseitig kontaktiert und kraftschlüssig gehalten. Die in der Innenwand ausgebildete Führungsstruktur bietet genügend Raum für die Greifbewegung.

Eine bevorzugte Ausführungsform zeichnet sich dadurch aus, dass das Biegewerkzeug in denselben Führungsstrukturen gehalten wird, in denen auch die Greifarme sitzen. Es muss somit keine zusätzliche Führungsstruktur für die Greifarme geschaffen werden, sondern können bestehende Strukturen genutzt werden.

Eine bevorzugte Ausführungsform zeichnet sich dadurch aus, dass der Greifer durch eine Feder in eine geöffnete Stellung vorgespannt ist. Der Antriebsmechanismus für die Kupplung muss demnach nur ausgebildet sein, um den Greifer in die geschlossene, d.h. das Biegewerkzeug ankoppelnde Stellung zu bringen. Dadurch kann die Konstruktion des Antriebsmechanismus stark vereinfacht werden.

Eine bevorzugte Ausführungsform zeichnet sich dadurch aus, dass die Greifarme jeweils durch einen Hebel gebildet werden und dass zwischen den Hebeln eine bewegbare, vorzugsweise keilförmige Spreizeinrichtung angeordnet ist, wobei die Hebel durch eine Bewegung der Spreizeinrichtung auseinander drückbar sind. Vorzugsweise ist die Spreizeinrichtung in einer Richtung bewegbar, die im Wesentlichen parallel zur Längserstreckung der Schiene steht, wodurch dem geringen zur Verfügung stehenden Raum optimal Rechnung getragen wird

Eine bevorzugte Ausführungsform zeichnet sich dadurch aus, dass jene Hebelabschnitte, die mit dem Biegewerkzeug zusammenwirken, kürzer sind als die mit der Spreizeinrichtung zusammenwirkende Hebelabschnitte. Die Hebelabschnitte sind jeweils bezogen auf den Angelpunkt des jeweiligen Hebels zu sehen. Durch diese Maßnahme kann die Greifkraft durch die Hebelwirkung erhöht werden.

Eine bevorzugte Ausführungsform zeichnet sich dadurch aus, dass die Transfereinrichtung ein in der Schiene der Werkzeughalterung geführtes Shuttle, insbesondere in Form eines Schlittens oder Wagens, umfasst und dass die Kupplung an dem Shuttle ausgebildet ist. Das Shuttle stellt eine stabile und schützende Plattform für die Lagerung der Kupplung und ihres Antriebsmechanismus dar.

Eine bevorzugte Ausführungsform zeichnet sich dadurch aus, dass die Kupplung durch einen vorzugsweise in oder an dem Shuttle angeordneten Aktuator, vorzugsweise eine Zylinder-Kolben-Einheit, betätigbar ist.

Eine bevorzugte Ausführungsform zeichnet sich dadurch aus, dass das Shuttle Halteelemente aufweist, die durch die dieselbe Führungsstruktur geführt sind, in der sich auch die Kupplung erstreckt. Auch hier können bestehende Strukturen zum Halten des Shuttles verwendet werden.

Eine bevorzugte Ausführungsform zeichnet sich dadurch aus, dass die Transfereinrichtung ein längliches, vorzugsweise flexibles Zug- und/oder Druckübertragungsmittel, insbesondere ein Band, ein Seil, eine Stange oder eine Kette, umfasst, und dass das Shuttle an das Zug- und/oder Druckübertragungsmittel angebunden ist. Durch den Einsatz eines Zug- und/oder Druckübertragungsmittels kann der Verfahrantrieb der Transfereinrichtung fern der Werkzeughalterungen angeordnet werden. Die Transfereinrichtung kann dadurch außerdem gewichtsarm und platzsparend konzipiert werden. Das Übertragungsmittel kann zur Übertragung von Zugkräften oder Druckkräften oder Zug- und Druckkräften ausgebildet sein. Wenn die Beschickung bzw. das Wechseln der Biegewerkzeuge nur von einem Ende der Schiene aus erfolgt, kommt ein Zug- und Druckübertragungsmittel zum Einsatz.

In einer alternativen Variante könnte das Shuttle auch selbstfahrend ausgebildet ist, wobei der Verfahrantrieb in oder an dem Shuttle angeordnet ist. Die Transfereinrichtung kann auf diese Weise besonders bauteilsparend konstruiert werden. Die Ansteuerung des Shuttle könnte drahtgebunden, aber auch per Funk erfolgen.

Eine bevorzugte Ausführungsform zeichnet sich dadurch aus, dass das Zug- und/oder Druckübertragungsmittel durch eine Führungsstruktur geführt ist, die durch eine Innenwand der Schiene gebildet wird, wobei vorzugsweise das Zug- und/oder Druckübertragungsmittel in derselben Führungsstruktur geführt ist, in der sich die Kupplung erstreckt.

Eine bevorzugte Ausführungsform zeichnet sich dadurch aus, dass in dem Shuttle ein Fenster angeordnet ist, durch das die Stellung der Kupplung von außen erkennbar ist und/oder durch das die Kupplung von einer Bedienperson betätigbar ist. Bei einer Störung des Systems kann ein Bediener sofort die Kupplungsstellung erkennen und entsprechende Maßnahmen treffen.

Eine bevorzugte Ausführungsform zeichnet sich durch eine Vielzahl von Werkzeughalterungen aus, die einen Biegewerkzeugspeicher bilden, wobei vorzugsweise die Werkzeughalterungen einzeln oder in einem zusammenwirkenden Verbund relativ zur Transfereinrichtung bewegbar sind. Dadurch können unterschiedliche Werkzeughalterungen von derselben Transfereinrichtung ,angefahren' bzw. durchfahren werden.

Eine bevorzugte Ausführungsform zeichnet sich dadurch aus, dass die Beschickungsvorrichtung ein Werkzeugwechsler zum Auswechseln von einem oder mehreren in einer Biegepresse eingesetzten Biegewerkzeugen ist. In dieser Variante erfolgt nicht nur eine Beschickung der Biegepresse mit Biegewerkzeugen, sondern es erfolgt auch eine Rückstellung von (nicht mehr gebrachten) Biegewerkzeugen von der Biegepresse in die Beschickungsvorrichtung bzw. den Werkzeugwechsler. Der Werkzeugwechsler ist automatisiert, d.h. mit einer Steuereinrichtung verbunden, die die Verfahrbewegung der Transfereinrichtung bzw. die Betätigung der Kupplung sowie gegebenenfalls die Bewegung des Biegewerkzeugspeichers relativ zur Transfereinrichtung steuert.

Eine bevorzugte Ausführungsform zeichnet sich dadurch aus, dass der Biegewerkzeugspeicher in Form eines Regales, einer Drehscheibe, einer Schiebebühne, einer Trommel, eines Paternosteraufzuges und/oder eines oder mehrerer Racks ausgebildet ist. Dadurch kann eine Vielzahl an verschiedenen Biegewerkzeugen zur Verfügung gestellt bzw. gewechselt werden. Eine bevorzugte Ausführungsform ist durch zumindest zwei Werkzeughalterungen gekennzeichnet, wobei eine Werkzeughalterung die Oberwerkzeughalterung und die andere Werkzeughalterung die Unterwerkzeughalterung bildet.

Das Ziel der Erfindung wird auch mit einem Verfahren zum Beschicken einer Biegepresse mit Biegewerkzeugen und/oder zum Auswechseln von einem oder mehreren in einer Biegepresse eingesetzten Biegewerkzeugen mit einer Beschickungsvorrichtung gemäß dem Anspruch 22 gelöst.

Das Ziel der Erfindung wird auch gelöst mit einer Biegewerkzeug-Transfereinrichtung zum Verschieben eines Biegewerkzeuges in der Werkzeughalterung einer Biegepresse und/oder einer Beschickungsvorrichtung, vorzugsweise in Form eines Shuttles, umfassend:
- einen Führungsabschnitt, der zum Einsetzen in eine ein Innenprofil aufweisende Schiene einer Werkzeughalterung ausgebildet ist; und
- eine lösbare Kupplung zum Anbinden eines Biegewerkzeuges,
wobei die Transfereinrichtung einen Antrieb zum Verfahren der Transfereinrichtung entlang der Längserstreckung der Schiene umfasst und wobei der Wirkbereich der Kupplung zumindest teilweise, vorzugsweise vollständig, auf Höhe des Führungsteils liegt.

Jener Abschnitt der Kupplung, der die Wirkfläche bzw. Kontaktfläche (z.B. Greiffläche) bildet - d.h. dazu ausgebildet ist, um mit dem Biegewerkzeug in Kontakt bzw. in Eingriff zu kommen -, ist auf dem Führungsabschnitt der Transfereinrichtung angeordnet. Beim Einsetzen in eine Schiene der Werkzeughalterung liegt dann der Wirkbereich der Kupplung - zumindest teilweise - innerhalb der Schiene. Auf die Vorteile dieser und der folgenden Maßnahmen wurde bereits weiter oben eingegangen; diese werden daher nicht nochmals wiederholt.

Bevorzugt wird die Kupplung durch einen mechanischen Greifer gebildet.

Bevorzugt umfasst der Greifer zwei Greifarme, die vorzugsweise an gegenüberliegenden Seiten des Führungsabschnittes angeordnet sind.

Bevorzugt ist der Greifer durch eine Feder in eine geöffnete Stellung vorgespannt.

Bevorzugt werden die Greifarme jeweils durch einen Hebel gebildet und ist zwischen den Hebeln eine bewegbare, vorzugsweise keilförmige Spreizeinrichtung angeordnet, wobei die Hebel durch eine Bewegung der Spreizeinrichtung auseinander drückbar sind.

Bevorzugt sind jene Hebelabschnitte, die mit dem Biegewerkzeug zusammenwirken, kürzer als die mit der Spreizeinrichtung zusammenwirkende Hebelabschnitte.

Eine bevorzugte Ausführungsform zeichnet sich dadurch aus, dass die Kupplung durch einen in oder an der Transfereinrichtung angeordneten Aktor, vorzugsweise eine Zylinder-Kolben-Einheit, betätigbar ist, wobei vorzugsweise der Aktor außerhalb des Führungsabschnittes angeordnet ist. ,Außerhalb' bedeutet in diesem Zusammenhang, dass der Aktor z.B. unterhalb des Führungsabschnittes (im Falle einer Oberwerkzeughalterung) oder oberhalb (im Falle einer Unterwerkzeughalterung) angeordnet sein kann. Selbstverständlich kann der Aktor innerhalb eines durch das Shuttle gebildeten Körpers angeordnet sein.

Eine bevorzugte Ausführungsform zeichnet sich dadurch aus, dass der Führungsabschnitt zumindest ein seitlich abragendes Halteelement zum Halten in einer Schiene einer Werkzeughalterung aufweist und dass die Kupplung bzw. der Wirkbereich der Kupplung auf derselben Höhe wie das Halteelement angeordnet ist. Dadurch können Kupplung und Halteelemente in derselben Führungsstruktur der Schiene geführt bzw. untergebracht sein.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegepresse;
- Fig. 2: eine Anordnung aus einer Biegepresse und einer Beschickungsvorrichtung;
- Fig. 3: ein Biegewerkzeug und eine Transfereinrichtung in Form eines Shuttles mit einer Kupplung;
- Fig. 4: eine Werkzeughalterung mit eingesetztem Biegewerkzeug und Transfereinrichtung;
- Fig. 5: die Werkzeughalterung aus Fig. 2 in perspektivischer Ansicht;
- Fig. 6: einen Blick ins Innere der Transfereinrichtung aus Fig. 1;
- Fig. 7: ein Schieneninnenprofil mit darin angeordneter Kupplung;
- Fig. 8: eine weitere Variante eines Schieneninnenprofils;
- Fig. 9: eine weitere Variante eines Schieneninnenprofils;
- Fig. 10: die Lage eines Zug- und/oder Druckübertragungsmittel innerhalb der Schiene;
- Fig. 11: eine in der Oberwerkzeughalterung verlaufende Transfereinrichtung aus Zug- und/oder Druckübertragungsmittel und Shuttle, das mittels einer Kupplung an ein Oberwerkzeug angekoppelt ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus der Biegepresse bzw. Beschickungsvorrichtung diese bzw. deren Bestandteile teilweise unmaßstäblich und/oder vergrößert und/oder verkleinert dargestellt wurden.

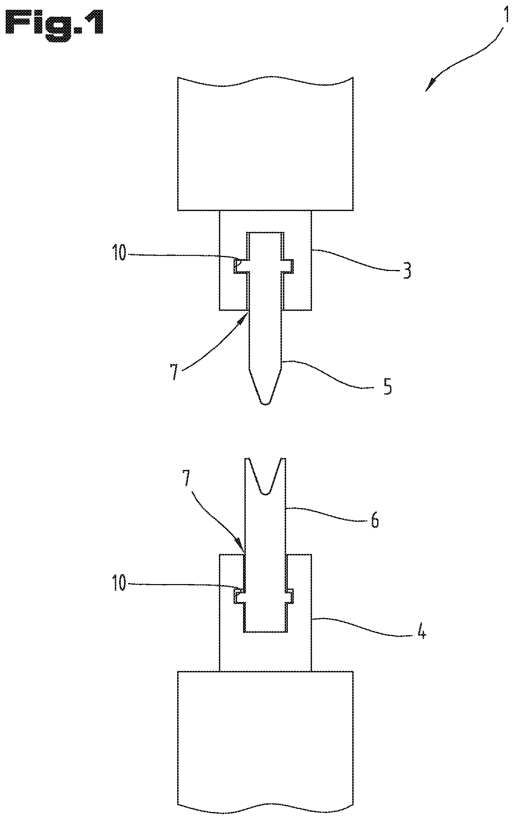

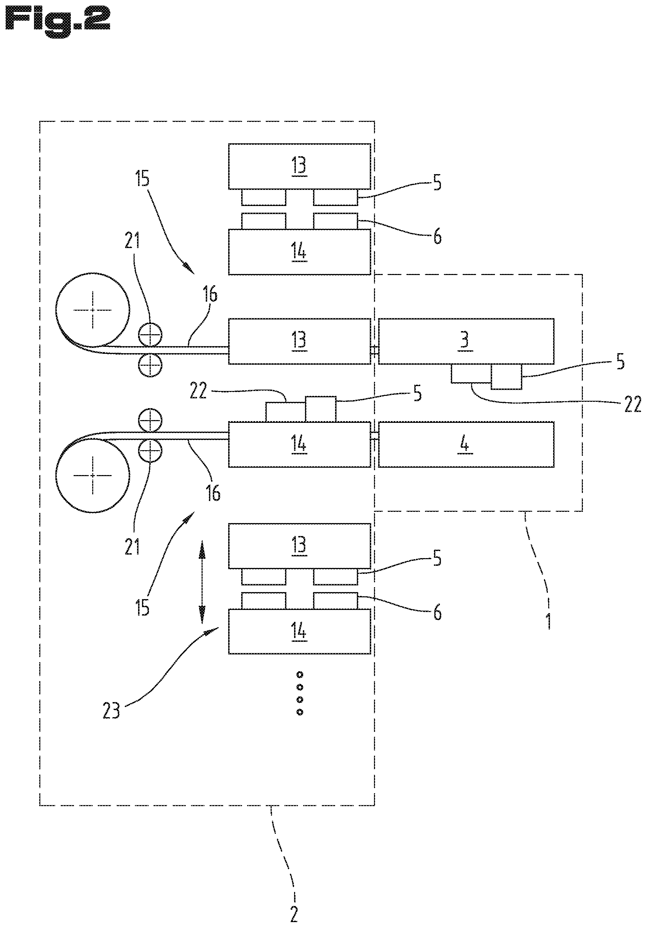

Fig. 1 zeigt eine Biegepresse 1, wobei an dieser Stelle angemerkt sei, dass eine Beschickungsvorrichtung 2 (Fig. 2) zum Beschicken einer Biegepresse 1 mit Biegewerkzeugen 5, 6 gleichermaßen - zumindest was die erfindungsgemäßen Merkmale betrifft - ausgebildet sein kann und dass die folgenden Ausführungen gleichermaßen auch auf eine Beschickungsvorrichtung 2 zutreffen können.

Fig. 2 zeigt eine Anordnung einer Biegepresse 1 und einer daran gekoppelten Beschickungseinrichtung 2 zum Beschicken der Biegepresse 1 mit Biegewerkzeugen 5, 6. Fig. 2 zeigt eine Vielzahl von Werkzeughalterungen 13, 14, die einen Biegewerkzeugspeicher 23 der Beschickungsvorrichtung 2 bilden. Wie durch den Doppelpfeil angedeutet können die Werkzeughalterungen 13, 14 einzeln oder in einem zusammenwirkenden Verbund relativ zur Transfereinrichtung 15 bewegbar sein, sodass eine Transfereinrichtung 15 in unterschiedliche Werkzeughalterungen einfahren und die dort gelagerten Biegewerkzeuge in die Biegepresse 1 verschieben kann. Die Beschickungsvorrichtung 2 ist in diesem Fall ein Werkzeugwechsler zum Auswechseln von einem oder mehreren in einer Biegepresse 1 eingesetzten Biegewerkzeugen 5, 6. Der Biegewerkzeugspeicher 23 kann in Form eines Regales, einer Drehscheibe, einer Schiebebühne, einer Trommel, eines Paternosteraufzuges und/oder eines oder mehrerer Racks ausgebildet ist.

Wie anhand der Figuren zu sehen umfasst die Biegepresse 1 und/oder die Beschickungsvorrichtung 2 zumindest zwei Werkzeughalterungen 3, 4 bzw. 13, 14, wobei eine Werkzeughalterung 3 bzw. 13 die Oberwerkzeughalterung und die andere Werkzeughalterung 4 bzw. 14 die Unterwerkzeughalterung bildet.

Die Biegepresse 1 bzw. Beschickungsvorrichtung 2 umfasst gemäß Fig. 2 zumindest zwei, vorzugsweise unabhängig voneinander ansteuerbare Transfereinrichtungen 15, wobei eine Transfereinrichtung 15 der Oberwerkzeughalterung 3 bzw. 13 und eine Transfereinrichtung 15 der Unterwerkzeughalterung 4 bzw. 14 zugeordnet ist.

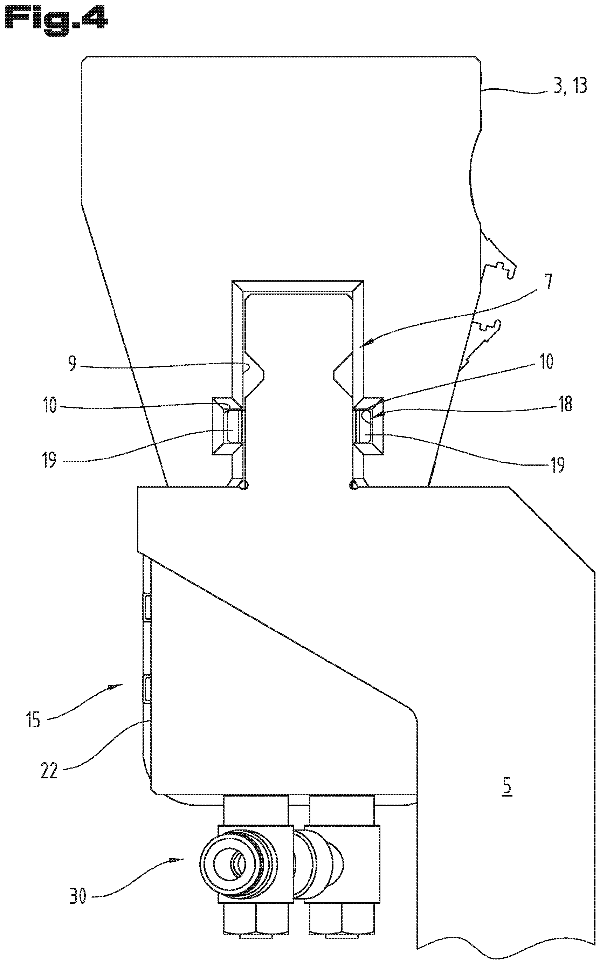

Aus den Fig. 1 bzw. 2 in Kombination mit Fig. 4 ist zu sehen, dass Biegepresse 1 und/oder Beschickungsvorrichtung 2 zumindest eine Werkzeughalterung 3, 4 bzw. 13, 14 mit einer ein Innenprofil 8 aufweisenden Schiene 7 zum Aufnehmen und Verschieben eines Biegewerkzeuges 5, 6 umfasst.

Eine durch einen Antrieb 21 (Fig. 2) entlang der Längserstreckung der Schiene 7 verfahrbare Transfereinrichtung 15 dient zum Verschieben eines Biegewerkzeuges 5, 6 innerhalb der Werkzeughalterung 3, 4 bzw. 13, 14 und/oder zwischen der Werkzeughalterung 13, 14 der Beschickungsvorrichtung 2 und einer Werkzeughalterung 3, 4 der Biegepresse 1.

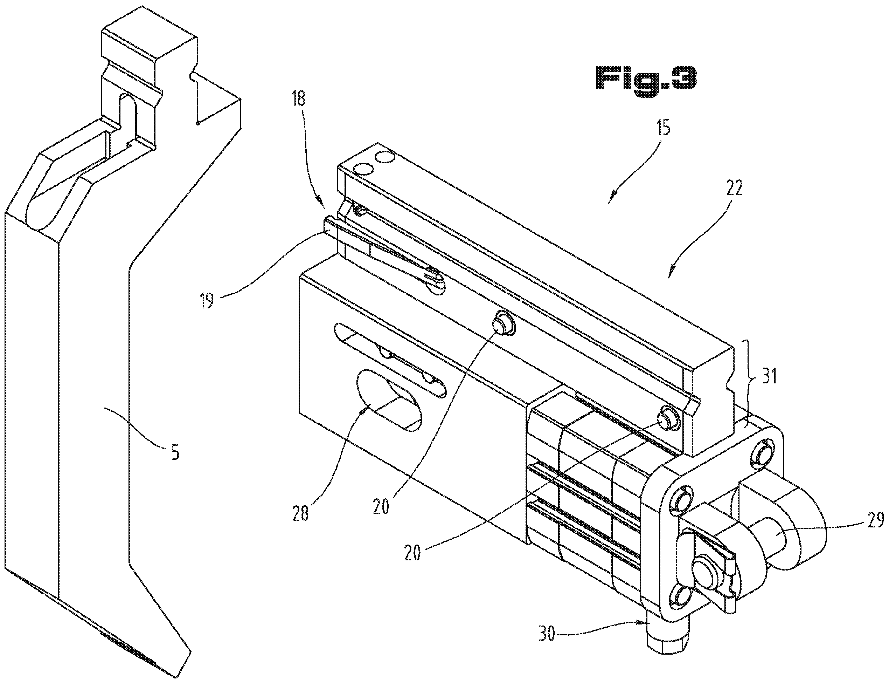

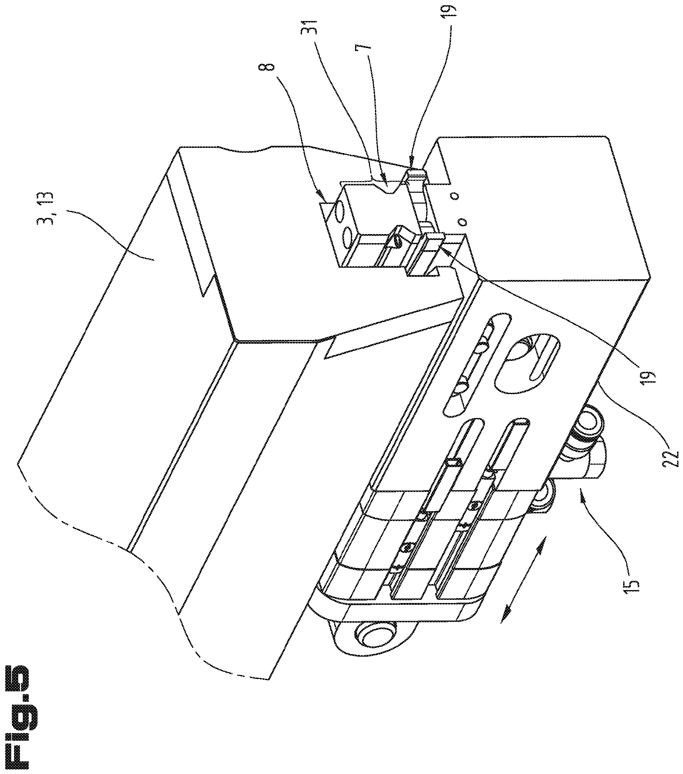

Die Fig. 3 bis 6 zeigen eine Transfereinrichtung 15 mit einer lösbaren Kupplung 18 zum Anbinden eines Biegewerkzeuges 5 (hier: als Oberwerkzeug ausgebildet). Die Transfereinrichtung 15 ist in der Schiene 7 der Werkzeughalterung 3, 4 bzw. 13, 14 geführt. Der Wirkbereich der Kupplung 18 liegt zumindest teilweise im Inneren der Schiene 7. In der dargestellten Ausführungsform liegt der Wirkbereich der Kupplung 18 vollständig innerhalb der Schiene 7. Der Wirkbereich ist jener Bereich der lösbaren Kupplung 18, der in der ankoppelnden Stellung mit dem Biegewerkzeug 5 zusammenwirkt, d.h. mit dem Biegewerkzeug in Kontakt bzw. in Eingriff kommt. Der Wirkbereich wird durch zumindest eine Wirkfläche oder Kontaktfläche (hier: durch die Greifflächen eines Greifers) gebildet, die in der ankoppelnden Stellung am Biegewerkzeug anliegen.

Die Biegewerkzeug-Transfereinrichtung 15 aus Fig. 3 weist einen Führungsabschnitt 31 auf, der zum Einsetzen in die Schiene 7 ausgebildet ist. Der Wirkbereich der Kupplung 18 liegt zumindest teilweise, vorzugsweise vollständig, auf Höhe des Führungsteils 31. Bei in die Schiene 7 eingesetzter Transfereinrichtung 15 bedeutet dies, dass der Wirkbereich (zumindest teilweise) im Inneren der Schiene 7 liegt. Die Greifarme 19 sind an gegenüberliegenden Seiten des Führungsabschnittes 31 angeordnet. Der Führungsabschnitt 31 weist seitlich abragende Halteelemente 20 zum Halten der Transfereinrichtung innerhalb der Schiene 7 auf. Die Kupplung 18 bzw. der Wirkbereich der Kupplung 18 ist an dem Führungsteil 31 auf derselben Höhe wie das Halteelement 20 angeordnet.

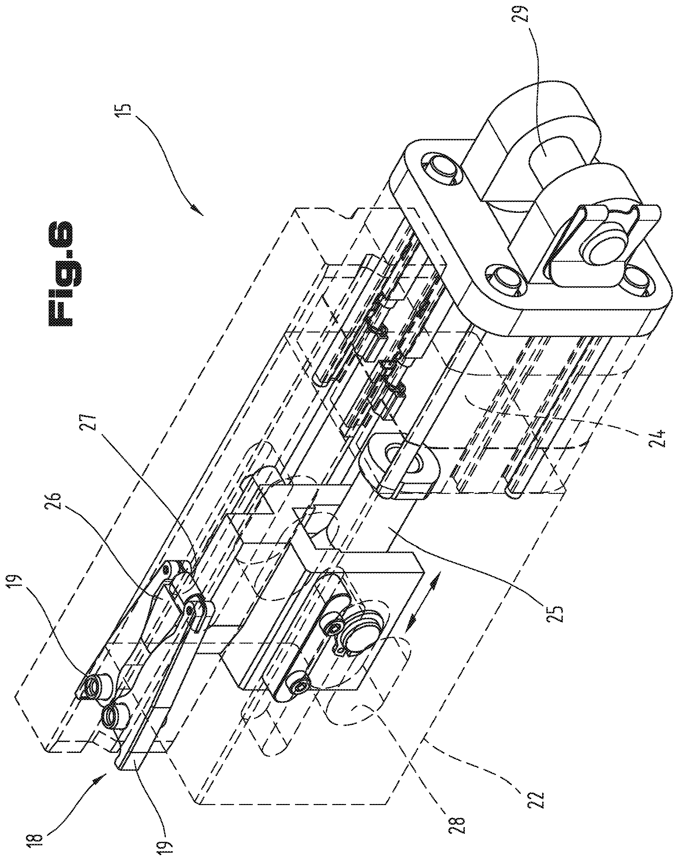

Ein zur Betätigung der Kupplung 18 vorgesehener Aktor 24 (Fig. 6) ist - insbesondere aus Platzgründen - nicht im, sondern außerhalb (hier: unterhalb) des Führungsabschnittes 31 angeordnet.

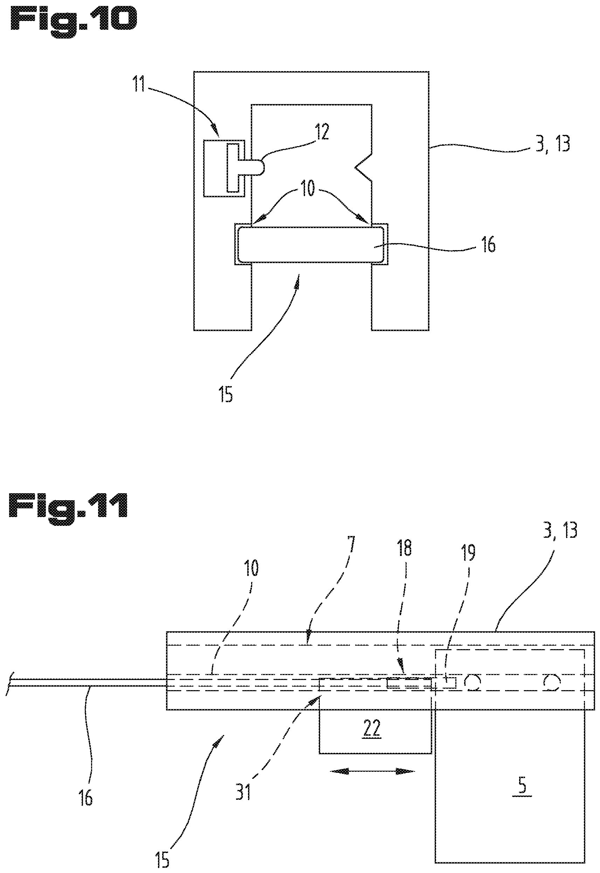

Besonders anschaulich ist das Prinzip dieser Ausführungsform in Fig. 11 dargestellt. Die Führungsstruktur 10 in Form einer Nut in der Innenwand der Schiene 7 hält die Transfereinrichtung 15, insbesondere das Shuttle 22, sowie das Biegewerkzeug 5. Die Kupplung 18 - hier mit ihren Greifarmen 19 - erstreckt sich ebenfalls in der Führungsstruktur 10.

Die Kupplung 18 wird in der dargestellten Ausführungsform durch einen mechanischen Greifer mit zwei Greifarmen gebildet. Wie aus Fig. 4 zu sehen liegen die Greifarme vollständig innerhalb der Schiene 7. Die durch die Greifarme 19 gebildete Kupplung 18 erstreckt sich in einem Bereich des Innenprofils 8 der Schiene 7, der vom Biegewerkzeug 5 nicht vollständig ausgefüllt ist. Zu sehen ist auch, dass zumindest eine Innenwand 9 der Schiene 7 eine sich in Längsrichtung der Schiene 7 erstreckende Führungsstruktur 10 ausbildet und dass die Kupplung 18 mit ihren Greifarmen 19 - in zumindest einer Stellung - in der Führungsstruktur 10 liegt bzw. in die Führungsstruktur 10 hineinragt.

In der konkreten Ausführungsform bilden zwei gegenüberliegende Innenwände 9 der Schiene 7 jeweils zumindest eine sich entlang der Längserstreckung der Schiene 7 verlaufende Führungsstruktur 10 in Form einer Nut aus, wobei sich - in zumindest einer Stellung der Kupplung 18 - ein Greifarm 19 in der einen Führungsstruktur 10 und der andere Greifarm 19 in der gegenüberliegenden Führungsstruktur 10 erstreckt. Die Greifarme 19 erstrecken sich ihrer Länge nach im Wesentlichen parallel zur Längserstreckung der Schiene 7. Die Schwenkachsen der Greifarme 19 stehen im Wesentlichen senkrecht zur Längserstreckung der Schiene 7 und im Wesentlichen parallel zur Richtung, in die sich die Schiene 7 öffnet.

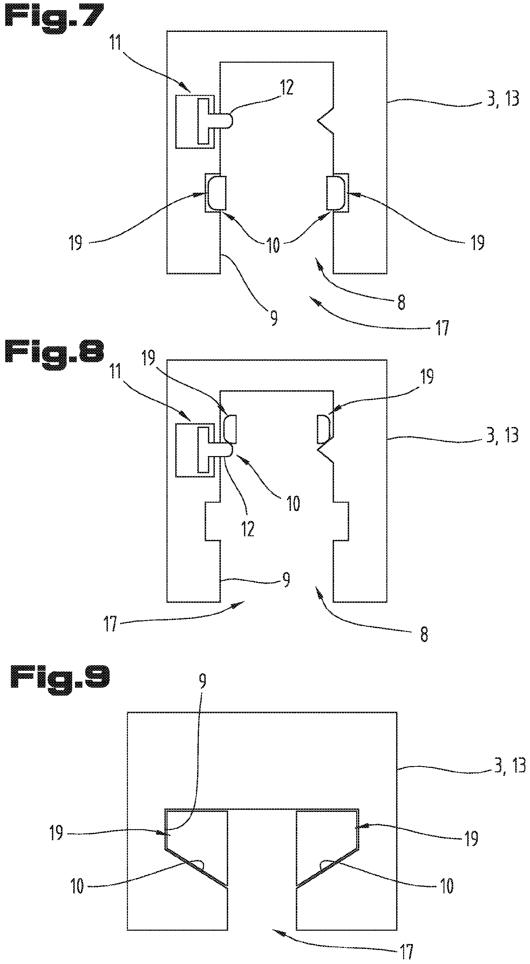

In der Fig. 7 ist zusätzlich zur Lage der Greifarme 19 in den Nuten eine Klemmeinrichtung 11 mit diskreten Klemmelementen 12 angedeutet. Die Funktion der Klemmeinrichtung 11 wird anhand der Fig. 8 näher beschrieben. Mit 17 wird die Schienenöffnung bezeichnet.

In Fig. 8 wird die Führungsstruktur 10 durch diskrete Führungselemente gebildet, die von einer Innenwand 9 ins Innere der Schiene 7 vorragen und in Längsrichtung der Schiene 7 verteilt angeordnet sind. In der dargestellten Ausführungsform weist die Biegepresse 1 und/oder die Beschickungsvorrichtung 2 eine Klemmeinrichtung 11 zum Klemmen des Biegewerkzeuges 5, 6 in der Schiene 7 auf. Dabei sind die diskreten Führungselemente durch antreibbare Klemmelemente 12 der Klemmeinrichtung 11 gebildet. Die Klemmelemente 12 sind von einer freigebenden (d.h. eingefahrenen) Stellung in eine das Biegewerkzeug klemmende (d.h. ausgefahrene) Stellung bringbar, z.B. durch eine Druckbeaufschlagungs-Einrichtung (angedeutet durch einen zylinder- bzw. kolbenförmige Ausbildung in Fig. 8). Die Kupplung 18 bzw. ein Greifarm 19 kann durch diese Klemmelemente 12 geführt sein bzw. sich oberhalb der Klemmelemente 12 erstrecken.

In Fig. 9 wird die Führungsstruktur 10 durch einen keilförmigen Abschnitt des Innenprofils 8 der Schiene 7 gebildet. Die Kupplung 18 bzw. die Greifarme 19 liegen auf dem keilförmigen Abschnitt auf bzw. erstrecken sich oberhalb des keilförmigen Abschnitts.

Das Biegewerkzeug 5 kann in derselben Führungsstruktur 10 gehalten werden, in der auch ein Greifarm 19 sitzt. Das Biegewerkzeug wird beispielsweise durch vom Schaft des Biegewerkzeuges abragende Haltemittel, wie z.B. Stifte, Pins oder Leisten gehalten. Die Haltemittel ragen in die Führungsstruktur, wodurch das Biegewerkzeug in der Schiene gehalten wird. Die Haltemittel können auch beweglich sein und z.B. durch ein Betätigungselement des Biegewerkzeuges (sog. Sicherheitsstifte) von einer haltenden in eine freigebende Stellung bewegt werden.

Wie bereits erwähnt kann die Transfereinrichtung 15 in Form eines in der Schiene 7 der Werkzeughalterung 3, 4 bzw. 13, 14 geführtes Shuttle 22, insbesondere in Form eines Schlittens oder Wagens, umfassen (Fig. 3 bis 6). Die Kupplung 18 ist dabei an dem Shuttle 22 ausgebildet. Das Shuttle 22 aus Fig. 3 weist Halteelemente 20 auf, die auf derselben Höhe sitzen wie die Kupplung 18 und damit durch dieselbe Führungsstruktur 10 geführt sind, in der sich auch die Kupplung 18 erstreckt.

In dem Shuttle 22 kann ein Fenster 28 ausgebildet sein, durch das die Stellung der Kupplung 18 von außen erkennbar ist und/oder durch das die Kupplung 18 von einer Bedienperson betätigbar ist.

Fig. 6 zeigt das Innenleben des Shuttles 22, insbesondere einen Aktor 24 in Form einer Zylinder-Kolben-Einheit zur Betätigung der Kupplung 18. Der Aktor 24 wirkt über eine Stange 25 mit einer (in Längsrichtung der Schiene 7) bewegbaren Spreizeinrichtung 26 zusammenwirkt. Das Shuttle 22 weist auch einen Anschluss 30 für eine Druckmittelleitung an. Alternativ oder zusätzlich könnte das Shuttle auch einen elektrischen Anschluss aufweisen. Die (elektrische oder Druckmittel-) Leitung kann in oder an einem länglichen Zug- und/oder Druckübertragungsmittel 16 verlaufen bzw. gehalten sein.

Die Greifarme 19 werden jeweils durch einen Hebel gebildet. Zwischen den Hebeln befindet sich ein keilförmiger Abschnitt der Spreizeinrichtung 26. Durch eine Bewegung der Spreizeinrichtung 26 in Richtung des vorderen Abschnittes der Greifarme 19 wird der hintere Hebelabschnitt auseinander gedrückt. Dadurch bewegen sich die vorderen Abschnitte der Hebel mit der Greiffläche aufeinander zu, wodurch das Biegewerkzeug gegriffen bzw. kraftschlüssig angekoppelt wird.

Jene Hebelabschnitte, die mit dem Biegewerkzeug 5 zusammenwirken (d.h. die Greiffläche ausbilden), sind kürzer sind als die mit der Spreizeinrichtung 26 zusammenwirkenden Hebelabschnitte. Der Greifer aus Fig. 6 ist durch eine Feder 27 in eine geöffnete Stellung vorgespannt.

Fig. 11 zeigt, dass die Transfereinrichtung 15 auch ein längliches, vorzugsweise flexibles Zug- und/oder Druckübertragungsmittel 16, insbesondere ein Band, ein Seil, eine Stange oder eine Kette, umfassen kann. Das Shuttle 22 ist an das Zug- und/oder Druckübertragungsmittel 16 angebunden. Dazu kann das Shuttle 22 eine Anbindung 29 aufweisen (Fig. 3).

Fig. 10 zeigt in Kombination mit Fig. 7 die Möglichkeit, dass das Zug- und/oder Druckübertragungsmittel 16 in derselben Führungsstruktur 10 geführt sein kann, in der sich die Kupplung 18 erstreckt.

Das Verfahren zum Beschicken einer Biegepresse 1 mit Biegewerkzeugen 5, 6 und/oder zum Auswechseln von einem oder mehreren in einer Biegepresse 1 eingesetzten Biegewerkzeugen 5, 6 mit einer Beschickungsvorrichtung 2 kann folgendermaßen ablaufen: Die Transfereinrichtung 15 mit der Kupplung 18 wird an ein Biegewerkzeug 5, 6 herangefahren. Die Kupplung 18 wird von einer freigebenden Stellung in eine das Biegewerkzeug 5, 6 ankoppelnde Stellung gebracht. Anschließend werden ein oder mehrere Biegewerkzeuge 5, 6 durch die Transfereinrichtung 15 zwischen der Werkzeughalterung 13, 14 der Beschickungsvorrichtung 2 und der Werkzeughalterung 3, 4 der Biegepresse 1 verschoben. Die Bewegungsrichtung der Transfereinrichtung 15 ist in Fig. 11 durch einen Doppelpfeil angedeutet.

**Bezugszeichenaufstellung**

| | | | |
|---|---|---|---|
| 1 | Biegepresse | 17 | Schienenöffnung |
| 2 | Beschickungsvorrichtung | 18 | Kupplung |
| 3 | Werkzeughalterung | 19 | Greifarm |
| 4 | Werkzeughalterung | 20 | Haltelement |
| 5 | Biegewerkzeug (Oberwerkzeug) | 21 | Antrieb |
| 6 | Biegewerkzeug (Unterwerkzeug) | 22 | Shuttle |
| 7 | Schiene | 23 | Biegewerkzeugspeicher |
| 8 | Innenprofil | 24 | Aktor |
| 9 | Innenwand | 25 | Stange |
| 10 | Führungsstruktur | 26 | Spreizeinrichtung |
| 11 | Klemmeinrichtung | 27 | Feder |
| 12 | Klemmelement | 28 | Fenster |
| 13 | Werkzeughalterung | 29 | Anbindung |
| 14 | Werkzeughalterung | 30 | Anschluss |
| 15 | Transfereinrichtung | 31 | Führungsabschnitt |
| 16 | Zug- und/oder Druckübertragungsmittel | | |

## Patentansprüche

1. Beschickungsvorrichtung (2) zum Beschicken einer Biegepresse (1) mit Biegewerkzeugen (5, 6), umfassend:
- zumindest eine Werkzeughalterung (13, 14) mit einer ein Innenprofil (8) aufweisenden Schiene (7) zum Aufnehmen und Verschieben eines Biegewerkzeuges (5, 6); und
- zumindest eine durch einen Antrieb (21) antreibbare Transfereinrichtung (15) zum Verschieben eines Biegewerkzeuges (5, 6) innerhalb der Werkzeughalterung (13, 14) und/oder zwischen der Werkzeughalterung (13, 14) der Beschickungsvorrichtung (2) und einer Werkzeughalterung (3, 4) einer Biegepresse (1),
wobei die Transfereinrichtung (15) eine lösbare Kupplung (18) zum Anbinden eines Biegewerkzeuges (5, 6) umfasst, **dadurch gekennzeichnet, dass** die Transfereinrichtung (15) in der Schiene (7) der Werkzeughalterung (3, 4; 13, 14) geführt ist und der Wirkbereich der Kupplung (18) zumindest teilweise im Inneren der Schiene (7), vorzugsweise vollständig innerhalb der Schiene (7), liegt.

2. Beschickungsvorrichtung nach Anspruch 1, **dadurch gekennzeichnet, dass** sich die Kupplung (18) in einem Bereich des Innenprofils (8) der Schiene (7) erstreckt, der vom Biegewerkzeug (5, 6) nicht vollständig ausgefüllt ist.

3. Beschickungsvorrichtung nach Anspruch 1 oder 2, **dadurch gekennzeichnet, dass** zumindest eine Innenwand (9) der Schiene (7) eine sich in Längsrichtung der Schiene (7) erstreckende Führungsstruktur (10) ausbildet und dass die Kupplung (18) - in zumindest einer Stellung der Kupplung (18) - in der Führungsstruktur (10) liegt oder in die Führungsstruktur (10) hineinragt.

4. Beschickungsvorrichtung nach einem der vorhergehenden Ansprüche, **dadurch gekennzeichnet, dass** die Kupplung (18) durch einen mechanischen Greifer gebildet wird, wobei vorzugsweise der Greifer durch eine Feder (27) in eine geöffnete Stellung vorgespannt ist.

5. Beschickungsvorrichtung nach Anspruch 4, **dadurch gekennzeichnet, dass** der Greifer zwei Greifarme (19) umfasst, die vorzugsweise vollständig innerhalb der Schiene (7) liegen.

6. Beschickungsvorrichtung nach Anspruch 5, **dadurch gekennzeichnet, dass** zwei gegenüberliegende Innenwände (9) der Schiene (7) jeweils zumindest eine sich entlang der Längserstreckung der Schiene (7) verlaufende Führungsstruktur (10), vorzugsweise in Form einer Nut, ausbilden und dass sich - in zumindest einer Stellung der Kupplung (18) - ein Greifarm (19) in der einen Führungsstruktur (10) und der andere Greifarm (19) in der gegenüberliegenden Führungsstruktur (10) erstreckt, wobei vorzugsweise das Biegewerkzeug (5, 6) in derselben Führungsstruktur (10) gehalten wird, in der auch ein Greifarm (19) sitzt.

7. Beschickungsvorrichtung nach Anspruch 5 oder 6, **dadurch gekennzeichnet, dass** die Greifarme (19) jeweils durch einen Hebel gebildet werden und dass zwischen den Hebeln eine bewegbare, vorzugsweise keilförmige Spreizeinrichtung (26) angeordnet ist, wobei die Hebel durch eine Bewegung der Spreizeinrichtung (26) auseinander drückbar sind, wobei vorzugsweise jene Hebelabschnitte, die mit dem Biegewerkzeug (5, 6) zusammenwirken, kürzer sind als die mit der Spreizeinrichtung (26) zusammenwirkende Hebelabschnitte.

8. Beschickungsvorrichtung nach einem der vorhergehenden Ansprüche, **dadurch gekennzeichnet, dass** die Transfereinrichtung (15) ein in der Schiene (7) der Werkzeughalterung (3, 4; 13, 14) geführtes Shuttle (22), insbesondere in Form eines Schlittens oder Wagens, umfasst und dass die Kupplung (18) an dem Shuttle (22) ausgebildet ist.

9. Beschickungsvorrichtung nach Anspruch 8, **dadurch gekennzeichnet, dass** die Kupplung (18) durch einen vorzugsweise in oder an dem Shuttle (22) angeordneten Aktor (24), vorzugsweise eine Zylinder-Kolben-Einheit, betätigbar ist, und/oder dass das Shuttle (22) Halteelemente (20) aufweist, die durch die dieselbe Führungsstruktur (10) geführt sind, in der sich auch die Kupplung (18) erstreckt, und/oder dass in dem Shuttle (22) ein Fenster (28) ausgebildet ist, durch das die Stellung der Kupplung (18) von außen erkennbar ist und/oder durch das die Kupplung (18) von einer Bedienperson betätigbar ist.

10. Beschickungsvorrichtung nach Anspruch 8 oder 9, **dadurch gekennzeichnet, dass** die Transfereinrichtung (15) ein längliches, vorzugsweise flexibles Zug- und/oder Druckübertragungsmittel (16), insbesondere ein Band, ein Seil, eine Stange oder eine Kette, umfasst, und dass das Shuttle (22) an das Zug- und/oder Druckübertragungsmittel (16) angebunden ist, wobei vorzugsweise das Zug- und/oder Druckübertragungsmittel (16) durch eine Führungsstruktur (10) geführt ist, die durch eine Innenwand (9) der Schiene (7) gebildet wird, wobei vorzugsweise das Zug- und/oder Druckübertragungsmittel (16) in derselben Führungsstruktur (10) geführt ist, in der sich die Kupplung (18) erstreckt.

11. Beschickungsvorrichtung nach einem der vorhergehenden Ansprüche, **gekennzeichnet durch** eine Vielzahl von Werkzeughalterungen (3, 4; 13, 14), die einen Biegewerkzeugspeicher (23) bilden, wobei vorzugsweise die Werkzeughalterungen (3, 4; 13, 14) einzeln oder in einem zusammenwirkenden Verbund relativ zur Transfereinrichtung (15) bewegbar sind.

12. Biegepresse (1) umfassend:
- zumindest eine Werkzeughalterung (3, 4) mit einer ein Innenprofil (8) aufweisenden Schiene (7) zum Aufnehmen und Verschieben eines Biegewerkzeuges (5, 6); und
- zumindest eine durch einen Antrieb (21) antreibbare Transfereinrichtung (15) zum Verschieben eines Biegewerkzeuges (5, 6) innerhalb der Werkzeughalterung (3, 4),
wobei die Transfereinrichtung (15) eine lösbare Kupplung (18) zum Anbinden eines Biegewerkzeuges (5, 6) umfasst, **dadurch gekennzeichnet, dass** die Transfereinrichtung (15) in der Schiene (7) der Werkzeughalterung (3, 4) geführt ist und der Wirkbereich der Kupplung (18) zumindest teilweise im Inneren der Schiene (7), vorzugsweise vollständig innerhalb der Schiene (7), liegt.

13. Biegepresse nach Anspruch 12, **dadurch gekennzeichnet, dass** sich die Kupplung (18) in einem Bereich des Innenprofils (8) der Schiene (7) erstreckt, der vom Biegewerkzeug (5, 6) nicht vollständig ausgefüllt ist.

14. Biegepresse nach Anspruch 12 oder 13, **dadurch gekennzeichnet, dass** zumindest eine Innenwand (9) der Schiene (7) eine sich in Längsrichtung der Schiene (7) erstreckende Führungsstruktur (10) ausbildet und dass die Kupplung (18) - in zumindest einer Stellung der Kupplung (18) - in der Führungsstruktur (10) liegt oder in die Führungsstruktur (10) hineinragt.

15. Biegepresse nach einem der Ansprüche 12 bis 14, **dadurch gekennzeichnet, dass** die Kupplung (18) durch einen mechanischen Greifer gebildet wird, wobei vorzugsweise der Greifer durch eine Feder (27) in eine geöffnete Stellung vorgespannt ist.

16. Biegepresse nach Anspruch 15, **dadurch gekennzeichnet, dass** der Greifer zwei Greifarme (19) umfasst, die vorzugsweise vollständig innerhalb der Schiene (7) liegen.

17. Biegepresse nach Anspruch 16, **dadurch gekennzeichnet, dass** zwei gegenüberliegende Innenwände (9) der Schiene (7) jeweils zumindest eine sich entlang der Längserstreckung der Schiene (7) verlaufende Führungsstruktur (10), vorzugsweise in Form einer Nut, ausbilden und dass sich - in zumindest einer Stellung der Kupplung (18) - ein Greifarm (19) in der einen Führungsstruktur (10) und der andere Greifarm (19) in der gegenüberliegenden Führungsstruktur (10) erstreckt, wobei vorzugsweise das Biegewerkzeug (5, 6) in derselben Führungsstruktur (10) gehalten wird, in der auch ein Greifarm (19) sitzt.

18. Biegepresse nach Anspruch 16 oder 17, **dadurch gekennzeichnet, dass** die Greifarme (19) jeweils durch einen Hebel gebildet werden und dass zwischen den Hebeln eine bewegbare, vorzugsweise keilförmige Spreizeinrichtung (26) angeordnet ist, wobei die Hebel durch eine Bewegung der Spreizeinrichtung (26) auseinander drückbar sind, wobei vorzugsweise jene Hebelabschnitte, die mit dem Biegewerkzeug (5, 6) zusammenwirken, kürzer sind als die mit der Spreizeinrichtung (26) zusammenwirkende Hebelabschnitte.

19. Biegepresse nach einem der Ansprüche 12 bis 18, **dadurch gekennzeichnet, dass** die Transfereinrichtung (15) ein in der Schiene (7) der Werkzeughalterung (3, 4) geführtes Shuttle (22), insbesondere in Form eines Schlittens oder Wagens, umfasst und dass die Kupplung (18) an dem Shuttle (22) ausgebildet ist.

20. Biegepresse nach Anspruch 19, **dadurch gekennzeichnet, dass** die Kupplung (18) durch einen vorzugsweise in oder an dem Shuttle (22) angeordneten Aktor (24), vorzugsweise eine Zylinder-Kolben-Einheit, betätigbar ist, und/oder dass das Shuttle (22) Halteelemente (20) aufweist, die durch die dieselbe Führungsstruktur (10) geführt sind, in der sich auch die Kupplung (18) erstreckt, und/oder dass in dem Shuttle (22) ein Fenster (28) ausgebildet ist, durch das die Stellung der Kupplung (18) von außen erkennbar ist und/oder durch das die Kupplung (18) von einer Bedienperson betätigbar ist.

21. Biegepresse nach Anspruch 19 oder 20, **dadurch gekennzeichnet, dass** die Transfereinrichtung (15) ein längliches, vorzugsweise flexibles Zug- und/oder Druckübertragungsmittel (16), insbesondere ein Band, ein Seil, eine Stange oder eine Kette, umfasst, und dass das Shuttle (22) an das Zug- und/oder Druckübertragungsmittel (16) angebunden ist, wobei vorzugsweise das Zug- und/oder Druckübertragungsmittel (16) durch eine Führungsstruktur (10) geführt ist, die durch eine Innenwand (9) der Schiene (7) gebildet wird, wobei vorzugsweise das Zug- und/oder Druckübertragungsmittel (16) in derselben Führungsstruktur (10) geführt ist, in der sich die Kupplung (18) erstreckt.

22. Verfahren zum Beschicken einer Biegepresse (1) mit Biegewerkzeugen (5, 6) und/oder zum Auswechseln von einem oder mehreren in einer Biegepresse (1) eingesetzten Biegewerkzeugen (5, 6) mit einer Beschickungsvorrichtung (2), wobei ein oder mehrere Biegewerkzeuge (5, 6) durch eine Transfereinrichtung (15) zwischen der Werkzeughalterung (13, 14) der Beschickungsvorrichtung (2) und der Werkzeughalterung (3, 4) der Biegepresse (1) verschoben werden, **dadurch gekennzeichnet, dass** die Biegepresse (1) nach einem der Ansprüche 12 bis 21 und/oder die Beschickungsvorrichtung (2) nach einem der Ansprüche 1 bis 11 ausgebildet ist/sind, wobei die Transfereinrichtung (15) mit der Kupplung (18) an ein Biegewerkzeug (5, 6) herangefahren wird und die Kupplung (18) von einer freigebenden Stellung in eine das Biegewerkzeug (5, 6) ankoppelnde Stellung gebracht wird.

23. Anordnung einer Biegepresse (1) und einer daran gekoppelten Beschickungsvorrichtung (2) zum Beschicken der Biegepresse (1) mit Biegewerkzeugen (5, 6), **dadurch gekennzeichnet, dass** die Biegepresse (1) nach einem der Ansprüche 12 bis 21 und/oder die Beschickungsvorrichtung (2) nach einem der Ansprüche 1 bis 11 ausgebildet ist/sind.

24. Biegewerkzeug-Transfereinrichtung (15) zum Verschieben eines Biegewerkzeuges (5, 6) in der Werkzeughalterung (3, 4; 13, 14) einer Biegepresse (1) und/oder einer Beschickungsvorrichtung (2), vorzugsweise in Form eines Shuttles (22), umfassend:
- einen Führungsabschnitt (31), der zum Einsetzen in eine ein Innenprofil (9) aufweisende Schiene (7) einer Werkzeughalterung (3, 4; 13, 14) ausgebildet ist; und
- eine lösbare Kupplung (18) zum Anbinden eines Biegewerkzeuges (5, 6),
**dadurch gekennzeichnet, dass** die Transfereinrichtung (15) einen Antrieb (21) zum Verfahren der Transfereinrichtung (15) entlang der Längserstreckung der Schiene (7) umfasst und dass der Wirkbereich der Kupplung (18) zumindest teilweise, vorzugsweise vollständig, auf Höhe des Führungsteils (31) liegt.

25. Biegewerkzeug-Transfereinrichtung nach Anspruch 24, **dadurch gekennzeichnet, dass** die Kupplung (18) durch einen mechanischen Greifer gebildet wird, wobei vorzugsweise der Greifer durch eine Feder (27) in eine geöffnete Stellung vorgespannt ist.

26. Biegewerkzeug-Transfereinrichtung nach Anspruch 25, **dadurch gekennzeichnet, dass** der Greifer zwei Greifarme (19) umfasst, die vorzugsweise an gegenüberliegenden Seiten des Führungsabschnittes (31) angeordnet sind.

27. Biegewerkzeug-Transfereinrichtung nach Anspruch 26, **dadurch gekennzeichnet, dass** die Greifarme (19) jeweils durch einen Hebel gebildet werden und dass zwischen den Hebeln eine bewegbare, vorzugsweise keilförmige Spreizeinrichtung (26) angeordnet ist, wobei die Hebel durch eine Bewegung der Spreizeinrichtung (26) auseinander drückbar sind, wobei vorzugsweise jene Hebelabschnitte, die mit dem Biegewerkzeug (5, 6) zusammenwirken, kürzer sind als die mit der Spreizeinrichtung (26) zusammenwirkende Hebelabschnitte.

28. Biegewerkzeug-Transfereinrichtung nach einem der Ansprüche 24 bis 27, **dadurch gekennzeichnet, dass** die Kupplung (18) durch einen in oder an der Transfereinrichtung (15) angeordneten Aktor (24), vorzugsweise eine Zylinder-Kolben-Einheit, betätigbar ist, wobei vorzugsweise der Aktor (24) außerhalb des Führungsabschnittes (31) angeordnet ist, und/oder dass der Führungsabschnitt (31) zumindest ein seitlich abragendes Halteelement (20) zum Halten in einer Schiene (7) einer Werkzeughalterung (3, 4; 13, 14) aufweist und die Kupplung (18) bzw. der Wirkbereich der Kupplung (18) auf derselben Höhe wie das Halteelement (20) angeordnet ist.

## Claims

1. Feeding device (2) for feeding a bending press (1) with bending tools (5, 6), comprising:
- at least one tool holder (13, 14) with a rail (7) comprising an inner profile (8) for receiving and displacing a bending tool (5, 6); and
- at least one transfer device (15) which can be driven by a drive (21) for displacing a bending tool (5, 6) inside the tool holder (13, 14) and/or between the tool holder (13, 14) of the feeding device (2) and a tool holder (3, 4) of a bending press (1),
the transfer device (15) comprising a releasable coupling (18) for connecting to a bending tool (5, 6), **characterized in that** the transfer device (15) is guided in the rail (7) of the tool holder (3, 4; 13, 14) and the active area of the coupling (18) lies at least partially, preferably entirely, inside the rail (7).

2. Feeding device according to claim 1, **characterized in that** the coupling (18) extends in a region of the inner profile (8) of the rail (7) which region is not completely filled by the bending tool (5, 6).

3. Feeding device according to claim 1 or 2, **characterized in that** at least one internal wall (9) of the rail (7) forms a guide structure (10) extending in the longitudinal direction of the rail (7) and that the coupling (18) - in at least one position of the coupling (18) - lies in the guide structure (10) or extends into the guide structure (10).

4. Feeding device according to any one of the preceding claims, **characterized in that** the coupling (18) is formed by a mechanical gripper, the gripper preferably being biased into an open position by means of a spring (27).

5. Feeding device according to claim 4, **characterized in that** the gripper comprises two gripping arms (19) which preferably lie entirely inside the rail (7).

6. Feeding device according to claim 5, **characterized in that** two oppositely lying internal walls (9) of the rail (7) respectively form at least one guide structure (10) running along the longitudinal extension of the rail (7), preferably in the form of a groove, and that - in at least one position of the coupling (18) - one gripping arm (19) extends through one guide structure (10) and the other gripping arm (19) extends through the oppositely lying guide structure (10), wherein preferably the bending tool (5, 6) is retained in the same guide structure (10) in which a gripping arm (19) also sits.

7. Feeding device according to claim 5 or 6, **characterized in that** the gripping arms (19) are formed by a lever in each case and that a displaceable, preferably wedge-shaped spreading device (26) is arranged between the levers, wherein the levers can be pushed apart from one another by a movement of the spreading device (26), wherein preferably those lever portions which co-operate with the bending tool (5, 6) are shorter than the lever portions which co-operate with the spreading device (26).

8. Feeding device according to any one of the preceding claims, **characterized in that** the transfer device (15) comprises a shuttle (22) guided in the rail (7) of the tool holder (3, 4; 13, 14), in particular in the form of a slide or carriage, and that the coupling (18) is disposed on the shuttle (22).

9. Feeding device according to claim 8, **characterized in that** the coupling (18) can be operated by an actuator (24) that is preferably disposed in or on the shuttle (22), preferably a cylinder-piston unit, and/or that the shuttle (22) has retaining elements (20) which are guided by the same guide structure (10) in which the coupling (18) also extends, and/or that a window (28) is provided in the shuttle (22) by means of which the position of the coupling (18) can be seen from outside and/or by means of which the coupling (18) can be operated by an operator.

10. Feeding device according claim 8 or 9, **characterized in that** the transfer device (15) comprises an elongate, preferably flexible, pull and/or push transmitting means (16), in particular a belt, a cable, a rod or a chain, and that the shuttle (22) is connected to the pull and/or push transmitting means (16), wherein preferably the pull and/or push transmitting means (16) is guided by a guide structure (10) formed by an internal wall (9) of the rail (7), wherein preferably the pull and/or push transmitting means (16) is guided in the same guide structure (10) in which the coupling (18) extends.

11. Feeding device according to any one of the preceding claims, **characterized by** a plurality of tool holders (3, 4; 13, 14) which form a bending tool storage (23), wherein preferably the tool holders (3, 4; 13, 14) can be moved individually or in a co-operating group relative to the transfer device (15).

12. Bending press (1), comprising:
- at least one tool holder (3, 4) with a rail (7) comprising an inner profile (8) for receiving and displacing a bending tool (5, 6); and
- at least one transfer device (15) which can be driven by a drive (21) for displacing a bending tool (5, 6) inside the tool holder (3, 4),
the transfer device (15) comprising a releasable coupling (18) for connecting to a bending tool (5, 6), **characterized in that** the transfer device (15) is guided in the rail (7) of the tool holder (3, 4) and the active area of the coupling (18) lies at least partially, preferably entirely, inside the rail (7).

13. Bending press according to claim 12, **characterized in that** the coupling (18) extends in a region of the inner profile (8) of the rail (7) which region is not completely filled by the bending tool (5, 6).

14. Bending press according to claim 12 or 13, **characterized in that** at least one internal wall (9) of the rail (7) forms a guide structure (10) extending in the longitudinal direction of the rail (7) and that the coupling (18) - in at least one position of the coupling (18) - lies in the guide structure (10) or extends into the guide structure (10).

15. Bending press according to any one of claims 12 to 14, **characterized in that** the coupling (18) is formed by a mechanical gripper, the gripper preferably being biased into an open position by means of a spring (27).

16. Bending press according to claim 15, **characterized in that** the gripper comprises two gripping arms (19) which preferably lie entirely inside the rail (7).

17. Bending press according to claim 16, **characterized in that** two oppositely lying internal walls (9) of the rail (7) respectively form at least one guide structure (10) running along the longitudinal extension of the rail (7), preferably in the form of a groove, and that - in at least one position of the coupling (18) - one gripping arm (19) extends through one guide structure (10) and the other gripping arm (19) extends through the oppositely lying guide structure (10), wherein preferably the bending tool (5, 6) is retained in the same guide structure (10) in which a gripping arm (19) also sits.

18. Bending press according to claim 16 or 17, **characterized in that** the gripping arms (19) are formed by a lever in each case and that a displaceable, preferably wedge-shaped spreading device (26) is arranged between the levers, wherein the levers can be pushed apart from one another by a movement of the spreading device (26), wherein preferably those lever portions which co-operate with the bending tool (5, 6) are shorter than the lever portions which co-operate with the spreading device (26).

19. Bending press according to any one of claims 12 to 18, **characterized in that** the transfer device (15) comprises a shuttle (22) guided in the rail (7) of the tool holder (3, 4), in particular in the form of a slide or carriage, and that the coupling (18) is disposed on the shuttle (22).

20. Bending press according to claim 19, **characterized in that** the coupling (18) can be operated by an actuator (24) that is preferably disposed in or on the shuttle (22), preferably a cylinder-piston unit, and/or that the shuttle (22) has retaining elements (20) which are guided by the same guide structure (10) in which the coupling (18) also extends, and/or that a window (28) is provided in the shuttle (22) by means of which the position of the coupling (18) can be seen from outside and/or by means of which the coupling (18) can be operated by an operator.

21. Bending press according to claim 19 or 20, **characterized in that** the transfer device (15) comprises an elongate, preferably flexible, pull and/or push transmitting means (16), in particular a belt, a cable, a rod or a chain, and that the shuttle (22) is connected to the pull and/or push transmitting means (16), wherein preferably the pull and/or push transmitting means (16) is guided by a guide structure (10) formed by an internal wall (9) of the rail (7), wherein preferably the pull and/or push transmitting means (16) is guided in the same guide structure (10) in which the coupling (18) extends.

22. Method for feeding a bending press (1) with bending tools (5, 6) and/or for changing one or more bending tools (5, 6) inserted in a bending press (1) using a feeding device (2), wherein one or more bending tools (5, 6) are displaced by a transfer device (15) between the tool holder (13, 14) of the feeding device (2) and the tool holder (3, 4) of the bending press (1), **characterized in that** the bending press (1) is formed according to any one of claims 12 to 21 and/or the feeding device (2) is formed according to any one of claims 1 to 11, wherein the transfer device (15) together with the coupling (18) is moved to a bending tool (5, 6) and the coupling (18) is moved from a releasing position into a position coupling the bending tool (5, 6).

23. Arrangement of a bending press (1) and a feeding device (2) coupled thereto for feeding the bending press (1) with bending tools (5, 6), **characterized in that** the bending press (1) is formed according to any one of claims 12 to 21 and/or the feeding device (2) is formed according to any one of claims 1 to 11.

24. Bending tool transfer device (15) for moving a bending tool (5, 6) in the tool holder (3, 4; 13, 14) of a bending press (1) and/or a feeding device (2), preferably in the form of a shuttle (22), comprising:
- a guide part (31) designed to be inserted in a rail (7) of a tool holder (3, 4; 13, 14) having an inner profile (9); and
- a releasable coupling (18) for connecting a bending tool (5, 6),
**characterized in that** the transfer device (15) comprises a drive (21) for moving the transfer device (15) along the longitudinal extension of the rail (7) and that the active area of the coupling (18) lies at least partially, preferably completely, at the height of the guide part (31).

25. Bending tool transfer device according to claim 24, **characterized in that** the coupling (18) is formed by a mechanical gripper, the gripper preferably being biased into an open position by means of a spring (27).

26. Bending tool transfer device according to claim 25, **characterized in that** the gripper comprises two gripping arms (19) which are preferably disposed on oppositely lying sides of the guide part (31).

27. Bending tool transfer device according to claim 26, **characterized in that** the gripping arms (19) are formed by a lever in each case and that a displaceable, preferably wedge-shaped spreading device (26) is arranged between the levers, wherein the levers can be pushed apart from one another by a movement of the spreading device (26), wherein preferably those lever portions which co-operate with the bending tool (5, 6) are shorter than the lever portions which co-operate with the spreading device (26).

28. Bending tool transfer device according to any one of claims 24 to 27, **characterized in that** the coupling (18) can be operated by an actuator (24) that is preferably disposed in or on the transfer device (15), preferably a cylinder-piston unit, wherein preferably the actuator (24) is arranged outside of the guide part (31), and/or that the guide part (31) has at least one laterally projecting retaining element (20) for retaining in a rail (7) of a tool holder (3, 4; 13, 14) and the coupling (18) and/or the active area of the coupling (18) is disposed at the same height as the retaining element (20).

## Revendications

1. Dispositif d'alimentation (2) pour l'alimentation d'une presse plieuse (1) avec des outils de pliage (5, 6) comprenant :
- au moins un porte-outil (13, 14) avec un rail (7) comprenant un profilé interne (8) pour le logement et le coulissement d'un outil de pliage (5,6) ; et
- au moins un dispositif de transfert (15) pouvant être entraîné par un dispositif d'entraînement (21) pour le coulissement d'un outil de pliage (5,6) à l'intérieur du porte-outil (13, 14) et/ou entre le porte-outil (13, 14) du dispositif d'alimentation (2) et un porte-outil (3, 4) d'une presse plieuse (1),
le dispositif de transfert (15) comprenant un couplage amovible (18) pour le raccordement d'un outil de pliage (5, 6), **caractérisé en ce que** le dispositif de transfert (15) est guidé dans le rail (7) du porte-outil (3, 4 ; 13, 14) et la zone d'action du couplage (18) se trouve au moins partiellement à l'intérieur du rail (7), de préférence entièrement à l'intérieur du rail (7).

2. Dispositif d'alimentation selon la revendication 1, **caractérisé en ce que** le couplage (18) s'étend dans une zone du profilé interne (8) du rail (7) qui n'est pas entièrement rempli par l'outil de pliage (5, 6).

3. Dispositif d'alimentation selon la revendication 1 ou 2, **caractérisé en ce qu'**au moins une paroi interne (9) du rail (7) forme une structure de guidage (10) s'étendant dans la direction longitudinale du rail (7) et **en ce que** le couplage (18), dans au moins une position du couplage (18), se trouve dans la structure de guidage (10) ou dépasse dans la structure de guidage (10).

4. Dispositif d'alimentation selon l'une des revendications précédentes, **caractérisé en ce que** le couplage (18) est formé par une pince mécanique, de préférence la pince étant précontrainte dans une position ouverte par un ressort (27).

5. Dispositif d'alimentation selon la revendication 4, **caractérisé en ce que** la pince comprend deux bras de pince (19) qui se trouvent de préférence entièrement à l'intérieur du rail (7).

6. Dispositif d'alimentation selon la revendication 5, **caractérisé en ce que** deux parois internes (9) opposées du rail (7) forment chacune au moins une structure de guidage (10) s'étendant le long de l'extension longitudinale du rail (7), de préférence sous la forme d'une rainure, et **en ce que**, dans au moins une position du couplage (18), un bras de pince (19) s'étend dans une structure de guidage (10) et l'autre bras de pince (19) s'étend dans la structure de guidage (10) opposée, de préférence l'outil de pliage (5, 6) étant maintenu dans la même structure de guidage (10) que celle dans laquelle se trouve également un bras de pince (19).

7. Dispositif d'alimentation selon la revendication 5 ou 6, **caractérisé en ce que** les bras de la pince (19) sont constitués chacun d'un levier et **en ce que**, entre les leviers, est disposé un dispositif d'écartement (26) mobile, de préférence cunéiforme, les leviers pouvant être écartés l'un de l'autre par un mouvement du dispositif d'écartement (26), de préférence les portions de leviers qui interagissent avec l'outil de pliage (5, 6) étant plus courts que les portions de leviers interagissant avec le dispositif d'écartement (26).

8. Dispositif d'alimentation selon l'une des revendications précédentes, **caractérisé en ce que** le dispositif de transfert (15) comprend une navette (22) guidée dans le rail (7) du porte-outil (3, 4 ; 13, 14), plus particulièrement sous la forme d'un chariot, et **en ce que** le couplage (18) est prévu sur la navette (22).

9. Dispositif d'alimentation selon la revendication 8, **caractérisé en ce que** le couplage (18) peut être actionné par un actionneur (24), disposé de préférence dans ou sur la navette (22), de préférence une unité cylindre-piston et/ou **en ce que** la navette (22) comprend des éléments de maintien (20) qui sont guidés par la même structure de guidage (10) que celle dans laquelle s'étend également le couplage (18) et/ou **en ce que**, dans la navette (22), est réalisée une fenêtre (28) à travers laquelle la position du couplage (18) peut être reconnue de l'extérieur et/ou à travers laquelle le couplage (18) peut être actionnée par un opérateur.

10. Dispositif d'alimentation selon la revendication 8 ou 9, **caractérisé en ce que** le dispositif de transfert (15) comprend un moyen de transmission de traction et/ou de pression (16) allongé, de préférence flexible, plus particulièrement une bande, un câble, une tige ou une chaîne, et **en ce que** la navette (22) est raccordée au moyen de transmission de traction et/ou de pression (16), de préférence le moyen de transmission de traction et/ou de pression (16) étant guidé par une structure de guidage (10), qui est formée par une paroi interne (9) du rail (7), de préférence le moyen de transmission de traction et/ou de pression (16) étant guidée dans la même structure de guidage (10) que celle dans laquelle s'étend le couplage (18).

11. Dispositif d'alimentation selon l'une des revendications précédentes, **caractérisé par** une pluralité de porte-outils (3, 4 ; 13, 14) qui forment un dispositif de stockage d'outils de pliage (23), de préférence les porte-outils (3, 4 ; 13, 14) pouvant être déplacés individuellement ou en interaction par rapport au dispositif de transfert (15).

12. Presse plieuse (1) comprenant :
- au moins un porte-outil (3, 4) avec un rail (7) comprenant un profilé interne (8) pour le logement et le coulissement d'un outil de pliage (5, 6) ; et
- au moins un dispositif de transfert (15) pouvant être entraîné par un dispositif d'entraînement (21) pour le coulissement d'un outil de pliage (5, 6) à l'intérieur du porte-outil (3, 4),
le dispositif de transfert (15) comprenant un couplage amovible (18) pour le raccordement d'un outil de pliage (5, 6), **caractérisée en ce que** le dispositif de transfert (15) est guidé dans le rail (7) du porte-outil (3, 4) et la zone d'action du couplage (18) se trouve au moins partiellement à l'intérieur du rail (7), de préférence entièrement à l'intérieur du rail (7).

13. Presse plieuse selon la revendication 12, **caractérisée en ce que** le couplage (18) s'étend dans une zone du profilé interne (8) du rail (7), qui n'est pas entièrement remplie par l'outil de pliage (5, 6).

14. Presse plieuse selon la revendication 12 ou 13, **caractérisée en ce qu'**au moins une paroi interne (9) du rail (7) forme une structure de guidage (10) s'étendant dans la direction longitudinale du rail (7) et **en ce que** le couplage (18), dans au moins une position du couplage (18), se trouve dans la structure de guidage (10) ou dépasse dans la structure de guidage (10).

15. Presse plieuse selon l'une des revendications 12 à 14, **caractérisée en ce que** le couplage (18) est constitué d'une pince mécanique, de préférence la pince étant précontrainte par un ressort (27) dans une position ouverte.

16. Presse plieuse selon la revendication 15, **caractérisée en ce que** la pince comprend deux bras de pince (19) qui se trouvent de préférence entièrement à l'intérieur du rail (7).

17. Presse plieuse selon la revendication 16, **caractérisée en ce que** deux parois internes (9) opposées du rail (7) forment chacune au moins une structure de guidage (10) s'étendant le long de l'extension longitudinale du rail (7), de préférence sous la forme d'une rainure, et **en ce que**, dans au moins une position du couplage (18), un bras de pince (19) s'étend dans une structure de guidage (10) et l'autre bras de pince (19) s'étend dans la structure de guidage (10) opposée, de préférence l'outil de pliage (5, 6) étant maintenu dans la même structure de guidage (10) que celle dans laquelle se trouve également un bras de pince (19).

18. Presse plieuse selon la revendication 16 ou 17, **caractérisée en ce que** les bras de la pince (19) sont constitués chacun d'un levier et **en ce que**, entre les leviers, est disposé un dispositif d'écartement (26) mobile, de préférence cunéiforme, les leviers pouvant être écartés l'un de l'autre par un mouvement du dispositif d'écartement (26), de préférence les portions de leviers qui interagissent avec l'outil de pliage (5, 6) étant plus courts que les portions de leviers interagissant avec le dispositif d'écartement (26).

19. Presse plieuse selon l'une des revendications 12 à 18, **caractérisée en ce que** le dispositif de transfert (15) comprend une navette (22) guidée dans le rail (7) du porte-outil (3, 4), plus particulièrement sous la forme d'un chariot, et **en ce que** le couplage (18) est prévu sur la navette (22).

20. Presse plieuse selon la revendication 19, **caractérisée en ce que** le couplage (18) peut être actionné par un actionneur (24), disposé de préférence dans ou sur la navette (22), de préférence une unité cylindre-piston et/ou **en ce que** la navette (22) comprend des éléments de maintien (20) qui sont guidés par la même structure de guidage (10) que celle dans laquelle s'étend également le couplage (18) et/ou **en ce que**, dans la navette (22), est réalisée une fenêtre (28) à travers laquelle la position du couplage (18) peut être reconnue de l'extérieur et/ou à travers laquelle le couplage (18) peut être actionnée par un opérateur.

21. Presse plieuse selon la revendication 19 ou 20, **caractérisée en ce que** le dispositif de transfert (15) comprend un moyen de transmission de traction et/ou de pression (16) allongé, de préférence flexible, plus particulièrement une bande, un câble, une tige ou une chaîne, et **en ce que** la navette (22) est raccordée au moyen de transmission de traction et/ou de pression (16), de préférence le moyen de transmission de traction et/ou de pression (16) étant guidé par une structure de guidage (10), qui est formée par une paroi interne (9) du rail (7), de préférence le moyen de transmission de traction et/ou de pression (16) étant guidée dans la même structure de guidage (10) que celle dans laquelle s'étend le couplage (18).

22. Procédé d'alimentation d'une presse plieuse (1) avec des outils de pliage (5, 6) et/ou pour le changement d'un ou de plusieurs outils de pliage (5, 6) insérés dans une presse plieuse (1), avec un dispositif d'alimentation (2), un ou plusieurs outils de pliage (5, 6) étant coulissés par un dispositif de transfert (15) entre le porte-outil (13, 14) du dispositif d'alimentation (2) et le porte-outil (3, 4) de la presse plieuse (1), **caractérisé en ce que** la presse plieuse (1) est conçue selon l'une des revendications 12 à 21 et/ou le dispositif d'alimentation (2) est conçu selon l'une des revendications 1 à 11, le dispositif de transfert (15) étant approché, avec le couplage (18), d'un outil de pliage (5, 6) et le couplage (18) étant amené d'une position de libération vers une position couplant l'outil de pliage (5, 6).

23. Disposition d'une presse plieuse (1) et d'un dispositif d'alimentation (2) couplé à celui-ci pour l'alimentation de la presse plieuse (1) avec des outils de pliage (5, 6), **caractérisée en ce que** la presse plieuse (1) est conçue selon l'une des revendications 12 à 21 et/ou le dispositif d'alimentation (2) est conçu selon l'une des revendications 1 à 11.

24. Dispositif de transfert d'outil de pliage (15) pour le coulissement d'un outil de pliage (5, 6) dans le porte-outil (3, 4 ; 13, 14) d'une presse plieuse (1) et/ou d'un dispositif d'alimentation (2), de préférence sous la forme d'une navette (22), comprenant :
- une portion de guidage (31), qui est conçue pour être insérée dans un rail (7) comprenant un profilé interne (9) d'un porte-outil (3, 4 ; 13, 14) ; et
- un couplage amovible (18) pour le raccordement d'un outil de pliage (5, 6), **caractérisé en ce que** le dispositif de transfert (15) comprend un dispositif d'entraînement (21) pour le déplacement du dispositif de transfert (15) le long de l'extension longitudinale du rail (7) et **en ce que** la zone d'action du couplage (18) se trouve au moins partiellement, de préférence entièrement, à la hauteur de la partie de guidage (31).

25. Dispositif de transfert d'outil de pliage selon la revendication 24, **caractérisé en ce que** le couplage (18) est constitué d'une pince mécanique, de préférence la pince étant précontrainte par un ressort (27) dans une position ouverte.

26. Dispositif de transfert d'outil de pliage selon la revendication 25, **caractérisé en ce que** la pince comprend deux bras de pince (19), qui sont disposés de préférence sur des côtés opposés de la portion de guidage (31).

27. Dispositif de transfert d'outil de pliage selon la revendication 26, **caractérisé en ce que** les bras de la pince (19) sont constitués chacun d'un levier et **en ce que**, entre les leviers, est disposé un dispositif d'écartement (26) mobile, de préférence cunéiforme, les leviers pouvant être écartés l'un de l'autre par un mouvement du dispositif d'écartement (26), de préférence les portions de leviers qui interagissent avec l'outil de pliage (5, 6) étant plus courts que les portions de leviers interagissant avec le dispositif d'écartement (26).

28. Dispositif de transfert d'outil de pliage selon l'une des revendications 24 à 27, **caractérisé en ce que** le couplage (18) peut être actionné par un actionneur (24), disposé de préférence dans ou sur le dispositif de transfert (15), de préférence une unité cylindre-piston, de préférence l'actionneur (24) étant disposé à l'extérieur de la portion de guidage (31) et/ou **en ce que** la portion de guidage (31) comprend au moins un élément de maintien (20) dépassant latéralement pour le maintien dans un rail (7) du porte-outil (3, 4 ; 13, 14) et le couplage (18) ou la zone d'action du couplage (18) se trouvant à la même hauteur que l'élément de maintien (20).
